# FASCICULE DE BREVET EUROPEEN

(11) **EP 4 476 535 B1**
(45) Date de publication et mention de la délivrance du brevet: **15.10.2025**
(21) Numéro de dépôt: 23709459.4
(22) Date de dépôt: 10.02.2023
(51) Int. Cl.: G01N 23/046, G06T 7/00

(54) **PROCÉDÉ D'ANALYSE TOMOGRAPHIQUE**
TOMOGRAPHISCHES ANALYSEVERFAHREN
TOMOGRAPHIC ANALYSIS METHOD

(30) Priorité: 11.02.2022 FR 2201225
(43) Date de publication de la demande: 18.12.2024
(73) Titulaire: SAFRAN AIRCRAFT ENGINES, 75015 Paris (FR)
(72) Inventeur: DUCHENE, Pierre, Alfred, Jean, 77550 MOISSY-CRAMAYEL (FR); CELESTIN, Harmonie, 77550 MOISSY-CRAMAYEL (FR)
(74) Mandataire: Ernest Gutmann - Yves Plasseraud S.A.S.
(86) Numéro de dépôt international: PCT/FR2023/050183
(87) Numéro de publication internationale: WO 2023/152454

(56) Documents cités:
- FR-A1- 3 104 301
- SALLING FILIP B ET AL: "Individual fibre inclination segmentation from X-ray computed tomography using principal component analysis", JOURNAL OF COMPOSITE MATERIALS, vol. 56, no. 1, 7 November 2021 (2021-11-07), USA, pages 83 - 98, XP055962687, ISSN: 0021-9983, Retrieved from the Internet <URL:https://backend.orbit.dtu.dk/ws/portalfiles/portal/258589965/Salling_FB_et_al_2021_Individual_fibre_inclination_segmentation_from_X_ray_computed_tomography_using_principal_component_analysis.pdf> DOI: 10.1177/00219983211052741
- SENCU R M ET AL: "Generation of micro-scale finite element models from synchrotron X-ray CT images for multidirectional carbon fibre reinforced composites", COMPOSITES PART A, ELSEVIER, AMSTERDAM, NL, vol. 91, 12 September 2016 (2016-09-12), pages 85 - 95, XP029794784, ISSN: 1359-835X, DOI: 10.1016/J.COMPOSITESA.2016.09.010
- EMERSON MONICA J ET AL: "Individual fibre segmentation from 3D X-ray computed tomography for characterising the fibre orientation in unidirectional composite materials", COMPOSITES PART A, ELSEVIER, AMSTERDAM, NL, vol. 97, 11 January 2017 (2017-01-11), pages 83 - 92, XP029972911, ISSN: 1359-835X, DOI: 10.1016/J.COMPOSITESA.2016.12.028
- KRAUSE M ET AL: "Determination of the fibre orientation in composites using the structure tensor and local X-ray transform", JOURNAL OF MATERIAL SCIENCE, KLUWER ACADEMIC PUBLISHERS, DORDRECHT, vol. 45, no. 4, 1 February 2010 (2010-02-01), pages 888 - 896, XP036678950, ISSN: 0022-2461, [retrieved on 20100201], DOI: 10.1007/S10853-009-4016-4

## Description

### Domaine technique de l'invention

L'invention concerne un procédé d'analyse tomographique d'une pièce mécanique. La pièce fait par exemple partie d'un aéronef, et plus précisément d'une turbomachine, comme une partie d'un carter de soufflante, une aube de soufflante, ou une partie d'une structure d'aubages fixes.

### Etat de la technique antérieure

Il est connu d'inspecter les pièces mécaniques structurelles par des méthodes de tomographie, par exemple radiographique ou acoustique, afin de détecter la présence d'éventuels défauts en surface et à l'intérieur de la pièce.

Ces méthodes sont fiables, non-invasives et permettent d'inspecter l'intérieur des pièces, ce qui permet de statuer rapidement sur l'état de la pièce et décider de sa potentielle remise en fonctionnement ou son remplacement.

Une mesure tomographique consiste en un balayage d'un objet observé, ici une pièce mécanique, au moyen d'un faisceaux d'ondes, et en une mesure du faisceau transmis dans toutes les directions afin de reconstituer une image tridimensionnelle de l'objet.

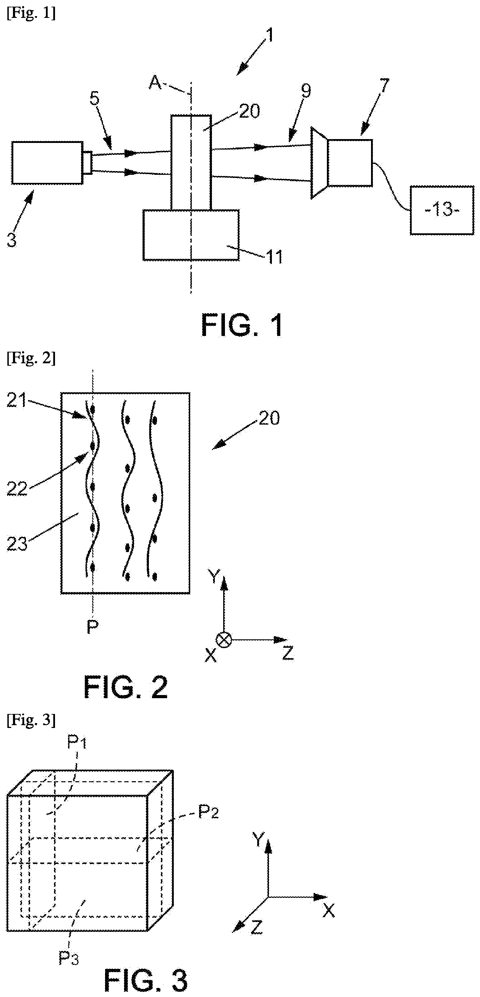

La figure 1 illustre un dispositif de tomographie 1 pendant l'inspection d'une pièce mécanique 20.

Le dispositif de tomographie 1 comprend au moins un dispositif d'émission 3, configuré pour émettre un faisceau incident 5 d'impulsions d'ondes en direction de la pièce 20, par exemple des ondes radiofréquence, des rayons X ou encore des ondes acoustiques, et un moins un récepteur 7 aptes à capter un faisceau transmis 9 d'ondes, agencés de part et d'autre de la pièce 20.

La pièce 20 est généralement montée sur un support 11 rotatif autour d'un axe A, afin d'être observée sous toutes les directions pendant la mesure tomographique.

La pièce 20 observée par tomographie peut être constituée d'un matériau composite, tel que représenté en détail sur la figure 2, qui comprend plusieurs phases distinctes comprenant des matériaux différents.

Un tel matériau composite comprend par exemple des fibres de trames 21 et des fibres de chaines 22 tissées les unes avec les autres sur un plan de tissage P, ou plusieurs plans de tissage P superposés selon une direction d'épaisseur Z. Un tel tissage est désigné comme bidimensionnel. Ces fibres 21, 22 sont également désignées par le terme de torons, et ces deux termes sont utilisés indifféremment par la suite.

Les fibres du matériau composite peuvent, alternativement, suivre un tissage tridimensionnel, avec des fibres s'étendant selon trois directions distinctes.

Les fibres 21 et 22 peuvent être des fibres de carbone, de verre, en polymère synthétique (par exemple de type « Kevlar » (marque déposée)), ou un mélange de plusieurs types de fibres. Elles sont noyées dans une matrice 23 comprenant par exemple un ou plusieurs polymères et/ou résines, qui se solidifient pour former la pièce 20 définitive.

Les amplitudes des ondes transmises sous les différents angles d'observations sont traduites en niveaux de gris dans un dispositif de traitement 13, et une analyse numérique permet de reconstituer le volume de la pièce 20. Le dispositif de traitement 13 comprend un ordinateur. Les niveaux de gris obtenus dépendent entre autres de la densité des matériaux traversés, et varient donc entre les différentes phases du matériau composite.

L'analyse par tomographie permet alors d'obtenir un visuel sur l'extérieur et l'intérieur de la pièce. Ce type de contrôle présente l'avantage majeur de permettre la visualisation dans l'épaisseur du matériau et de la pièce étudiée, tout en étant non-destructif et fiable.

Un opérateur humain peut alors évaluer la qualité de la pièce, en identifiant les différentes phases de la pièce et en étudiant le schéma de tissage, afin de détecter la présence éventuelle d'une anomalie ou d'un dégât.

En effet, beaucoup de propriétés mécaniques de la pièce définitive dépendent de la bonne tenue des fibres tissées, qui peut être évaluée par plusieurs indicateurs. On peut notamment citer le ratio chaine / trame et le taux volumique de fibre. Ces paramètres peuvent aussi varier au sein même du tissage avec des torons de tailles différentes ou autres.

Dans ce qui suit, les termes « non-conformité », « anomalie », « dégât », « endommagement » ou équivalents sont utilisés indifféremment pour désigner une partie de la pièce où les propriétés maniques de la pièce sont localement dégradées par rapport à celles d'une pièce en bon état.

Il peut également s'agir de la présence d'un corps étranger dans le matériau, comme un vide (porosité) ou un matériau arrivé par erreur dans la pièce lors de sa mise en forme. Une telle anomalie peut justifier un retrait et un remplacement de la pièce lorsque sa tenue mécanique est compromise, ou, selon les cas, peut ne pas s'opposer au bon fonctionnement de la pièce. Dans le cas d'un matériau composite, il peut également s'agir d'une zone où les fibres 21, 22 sont distendues ou rompues.

Il est important de noter que l'analyse de l'image de tomographie est toujours laissée actuellement à l'opérateur humain, qui doit séparer les fibres et la matrice et étudier le tissage manuellement. Cette étape génère un délai important car l'image tridimensionnelle est complexe et étendue, ce qui rend son inspection fastidieuse.

Le document Sencu et al:"Generation of micro-scale finite element models from synchrotron X-ray CT images for multidirectional carbon fibre reinforced composites", COMPOSITES PART A (2016), divulgue un procédé d'analyse automatique du tissage d'une pièce composite.

### Présentation de l'invention

L'invention vise à remédier à ces inconvénients, en proposant une méthode d'analyse fournissant automatiquement des informations sur la répartition des fibres dans une image radiographique. De telles informations permettent par exemple une reconstruction numérique du volume de la pièce observée.

A cet effet, l'invention a pour objet un procédé d'analyse tomographique d'une pièce composite comprenant une matrice et des fibres noyées dans la matrice, le procédé comprenant les étapes suivantes :
- acquisition d'au moins une image bidimensionnelle de la pièce au moyen d'un dispositif de tomographie,
- génération d'une pluralité de formes caractéristiques des fibres et, optionnellement, pour chaque forme caractéristique, d'un masque de convolution comprenant une pluralité de copies de la forme caractéristique,
- calcul, pour chacune des formes caractéristiques, d'un produit de convolution de l'image bidimensionnelle avec la forme caractéristique ou avec le masque de convolution correspondant, et obtention d'une image de convolution,
- détection d'une position dans l'image bidimensionnelle correspondant à un maximum global sur toutes les images de convolution obtenues pour chacune des formes caractéristiques, et attribution d'un centre de fibre à ladite position,
- marquage comme traitée d'une région de l'image disposée autour du centre de fibre et correspondant à la forme caractéristique pour laquelle le maximum a été obtenu, et
- itération des étapes de calcul, de détection et de marquage sur les régions non-traitées de l'image.

Un tel procédé permet de détecter automatiquement les fibres dans une image bidimensionnelle résultant d'une coupe d'une image tomographique, et ainsi de recueillir des informations sur les positions, dimensions et orientations des fibres afin d'observer et/ou de modéliser la pièce.

Le procédé peut comprendre une étape de prétraitement de l'image, comprenant au moins l'un parmi un filtrage d'une valeur moyenne de l'image, et une suppression de bords de l'image. Une telle étape de filtrage permet de s'affranchir d'effets parasites résultat de l'acquisition tomographique, comme par exemple un gradient d'ensemble sur l'image.

Le filtrage peut être effectué au moyen d'un filtre du type gaussien médian.

L'étape d'acquisition de la au moins une image bidimensionnelle peut comprendre l'acquisition d'une image tridimensionnelle de la pièce au moyen du dispositif de tomographie et la réalisation d'au moins une coupe plane dans l'image tridimensionnelle pour obtenir chaque image bidimensionnelle.

Une telle étape permet de générer plusieurs images bidimensionnelles orientées selon les différentes directions d'intérêt de la pièce, à partir des résultats de tomographie.

Les formes caractéristiques des fibres peuvent être des ellipses.

Une telle géométrie permet une détection efficace et l'obtention d'informations utiles sur l'orientation et la disposition des fibres, tout en restant suffisamment simple pour limiter le temps de calcul.

Parmi les formes caractéristiques générées, au moins deux des formes caractéristiques peuvent présenter des dimensions différentes l'une de l'autre.

Une telle caractéristique permet de prendre en compte les variations des dimensions des fibres dans la pièce.

Dans le cas où les formes caractéristiques sont des ellipses, les dimensions sont par exemple la longueur du grand axe et la longueur du petit axe de chaque ellipse.

Parmi les formes caractéristiques générées, au moins deux des formes caractéristiques peuvent présenter des inclinaisons différentes l'une de l'autre par rapport à une direction de référence de l'image bidimensionnelle.

Une telle caractéristique permet de prendre en compte les variations d'orientation des fibres dans la pièce et ainsi d'améliorer la détection.

Parmi les masques de convolution générés, au moins deux masques de convolution peuvent comprendre des formes caractéristiques disposées avec des écartements différents entre lesdits deux masques de convolution.

Une telle caractéristique permet de prendre en compte les variations locales d'arrangement des fibres et ainsi d'améliorer la détection.

Les écartements sont par exemple mesurés entre les centres de deux fibres voisines.

La pièce peut être une pièce de carter de turbomachine, ou une aube de rotor de compresseur, de stator ou de soufflante d'une turbomachine.

L'invention concerne également un produit programme d'ordinateur comprenant des instructions permettant, lorsqu'il est exécuté sur un ordinateur, la mise en œuvre du procédé.

### Brève description des figures

[Fig. 1] la figure 1 est une vue schématique de côté d'un dispositif de tomographie au cours de la mise en œuvre d'un procédé selon l'invention,
[Fig. 2] la figure 2 est une vue schématique de détail d'une pièce en matériau composite tissé,
[Fig. 3] la figure 3 est une vue schématique d'une étape de préparation d'images du procédé selon l'invention,
[Fig. 4] la figure 4 est une vue d'exemples de formes caractéristiques de torons utilisées dans le procédé selon l'invention,
[Fig. 5] la figure 5 est une vue d'exemples de masques comprenant une pluralité de formes caractéristiques de la figure 4, et
[Fig. 6] la figure 6 est une vue de la détection progressive de torons dans une image par le procédé selon l'invention.

### Description détaillée de l'invention

Un procédé d'analyse tomographique selon l'invention va maintenant être décrit. Ce procédé met en œuvre le dispositif d'analyse 1 décrit précédemment en rapport avec la figure 1, pour observer une pièce 20.

La pièce 20 est par exemple réalisée par exemple en matériau composite, telle que représentée sur la figure 2.

Le matériau composite comprend des fibres de trames 21 s'étendant selon une direction de trame X et des fibres de chaînes 22 s'étendant selon une direction de chaîne Y, noyées dans une matrice 23. L'écart moyen entre deux fibres de trame 21 ou de chaîne 22 voisines est de l'ordre de 2 mm.

Une épaisseur de la pièce 20, mesurée selon une direction d'épaisseur Z, est par exemple compris entre 5 et 25 mm, notamment proche de 10 mm pour une pièce 20 comprenant quatre à huit plans de plans de tissage superposés.

Les fibres de trames 21 et chaînes 22 peuvent être de matériaux identiques ou différents (verre, carbone ou « Kevlar » (marque déposée)).

La matrice 23 comprend au moins un polymère organique et/ ou au moins une résine.

Les matériaux composites tissés peuvent être considérés comme des matériaux orthotropes, c'est-à-dire de matériaux possédant trois plans de symétrie au niveau de leur microstructure interne.

Alternativement, le matériau composite peut comprendre des fibres de trame 21 et de chaîne 22, ainsi que des fibres s'étendant selon la direction d'épaisseur Z, formant ainsi un tissage tridimensionnel.

Le procédé vise à obtenir des informations relatives à la répartition des fibres 21, 22 dans la matrice 23. Pour cela, le procédé vise à obtenir les positions des centres des sections des fibres 21, 22 et les dimensions et orientations desdites sections des fibres 21, 22 dans au moins une image bidimensionnelle correspondant à une section de la pièce 20 dans un plan prédéterminé.

Le procédé comprend une première étape d'acquisition d'au moins une image tridimensionnelle de la pièce 20, au moyen du dispositif de tomographie 1.

Un faisceau incident 5 d'impulsions d'ondes est émis par le dispositif d'émission 3, en direction de la pièce 20. Le faisceau incident 5 est par exemple un faisceau d'ondes radiofréquences.

Les ondes traversent la pièce 20, et un faisceau transmis 9 issu de la pièce 20 est capté par le récepteur 7. La distribution d'intensité du faisceau transmis 9 obtenue est convertie en une image bidimensionnelle en niveaux de gris de la pièce 20 par le dispositif de traitement 13. La pièce 20 est mise en rotation au moyen du support 11, et des images bidimensionnelles de la pièce 20 sont acquise sous toutes les directions.

Une image tridimensionnelle 30, représentée sur la figure 3, de la pièce 20 en niveaux de gris, ou image tomographique, est alors reconstituée par traitement d'image au moyen du dispositif de traitement 13, l'image comprenant une pluralité de voxels présentant chacun un niveau de gris respectif.

L'étape d'acquisition comprend ensuite la préparation d'au moins une image bidimensionnelle par réalisation, pour chaque image bidimensionnelle, d'une coupe de l'image tridimensionnelle 30 dans un plan respectif P1, P2, P3, comme représenté sur la figure 3

Chaque plan de coupe P1, P2, P3 peut être par exemple perpendiculaire à la direction de trame, à la direction de chaine ou à la direction d'épaisseur.

Les images bidimensionnelles obtenues sont des images sensiblement rectangulaires, comprenant une pluralité de pixels présentant chacun un niveau de gris respectif.

Le procédé comprend avantageusement une étape de prétraitement de chaque image bidimensionnelle permettant d'améliorer l'obtention de résultats par le procédé d'analyse.

Le prétraitement comprend un filtrage d'une valeur moyenne de niveau de gris de l'image, au moyen d'un filtre gaussien médian.

En effet, l'image peut comprendre un gradient parasite de niveaux de gris résultant de l'acquisition par tomographie, qui peut perturber l'analyse ultérieure. Le filtrage sur la valeur moyenne permet de supprimer ce gradient pour la suite du procédé.

En revanche, l'application d'un tel filtre sur l'image peut rendre inexploitable les bords de l'image, qu'il faut alors supprimer. Le prétraitement peut alors comprendre une étape de rognage des bords de l'image et de recentrage de l'image résultante.

Le procédé comprend ensuite une étape de génération d'une pluralité de formes caractéristiques 40 des fibres 21, 22, utilisées pour détecter les sections des fibres dans chaque image bidimensionnelle.

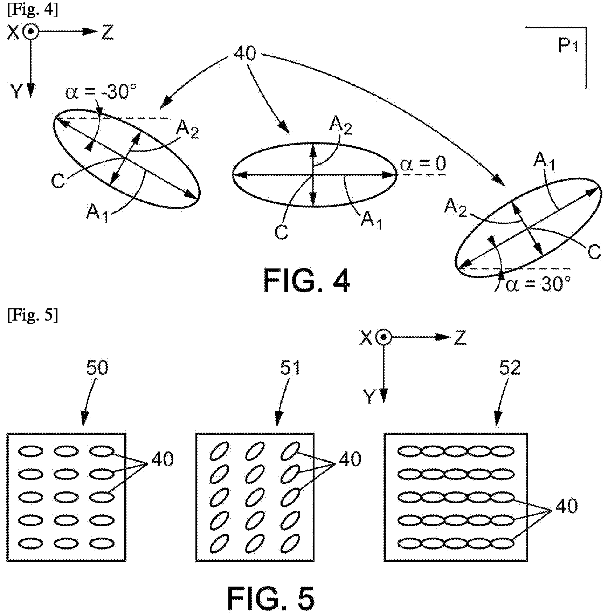

Les formes caractéristiques 40, représentées sur la figure 4, sont des approximations de la section d'une fibre 21, 22 dans le plan de l'image. Elles présentent par exemple des formes elliptiques et comportent chacune un centre C, un grand axe A1 et un petit axe A2.

La position d'une ellipse est définie par son centre C, ses dimensions par les longueurs du grand axe A1 et du petit axe A2, et son orientation par un angle α formé entre le grand axe A1 et une direction de référence de l'image, par exemple la direction d'épaisseur Z dans l'exemple représenté.

Les dimensions des formes caractéristiques 40 peuvent être déterminées par observation directe sur l'image d'un certain nombre de fibres 21, 22, par exemple entre 5 et 10, et par identification de valeurs moyennes et d'écarts-type associés.

Une autre méthode de détermination des dimensions de formes caractéristiques est de partir de la connaissance des fibres 21, 22 initiales avant la formation de la pièce 20 composite et leur inclusion dans la matrice 23. La taille des formes composites peut alors être obtenue en appliquant un facteur d'échelle entre les dimensions réelles de la pièce et la taille des pixels de l'image.

Sur la base de ces informations, une dizaine de formes caractéristiques 40 sont générées avec des dimensions variant de l'une à l'autre.

Un nombre plus ou moins grand de formes caractéristiques 40 peut être déterminé, en fonction du temps de calcul disponible et de la précision désirée.

Les orientations des formes caractéristiques 40 peuvent théoriquement être quelconques. Cependant, la pratique montre que les orientations correspondent à des angles α formant une distribution majoritairement comprise entre -30° et 30° autour d'une orientation médiane.

Ainsi, le procédé comprend l'identification de cette orientation médiane sur l'image par l'observation d'un certain nombre de sections de fibres 21, 22, et la prise en compte d'orientations distribuées autour de cette valeur médiane à pas angulaire constant, par exemple 10°, entre -30° et 30° autour de l'orientation médiane.

La combinaison de ces orientations appliquées aux formes caractéristiques 40 de dimensions multiples déterminées précédemment donne par exemple entre 50 et 100 formes caractéristiques 40 différentes pouvant être recherchées dans l'image.

Selon la durée voulue des calculs, le pas angulaire peut être augmenté ou diminué pour obtenir plus ou moins de formes caractéristiques 40.

Pour chaque forme caractéristique, le procédé comprend la préparation d'au moins un masque de convolution 50, 51, 52, tels que représenté figure 5, comprenant une pluralité de telles formes caractéristiques 40 identiques, arrangées ensembles pour former un motif.

L'arrangement des formes caractéristiques 40 peut être varié d'un masque de convolution 50, 51, 52 à l'autre, en variant l'écartement entre les formes caractéristiques 40 ou bien leurs positions respectives.

Par exemple, le premier masque 50 comprend des formes orientées avec un angle α nul, le deuxième masque 51 des formes inclinées avec α=30° et le troisième masque 52 des formes orientées avec un angle α nul et une distance réduite entre les formes selon la direction d'épaisseur Z.

Le procédé comprend ensuite une étape de calcul, pour chacun des masques de convolution 50, 51, 52, d'un produit de convolution de l'image bidimensionnelle avec le masque de convolution, et l'obtention d'une image de convolution résultante de ce calcul.

Alternativement, le calcul du produit de convolution peut être fait avec une unique forme caractéristique 40.

Le calcul de convolution est alors plus rapide, mais les résultats obtenus sont moins sensibles à la variabilité des torons.

Le calcul de convolution est effectué pour chacune des formes caractéristiques 40, soit plusieurs dizaines de fois, et autant d'images de convolution sont obtenues.

Les images de convolution obtenues par le calcul pour chacune des formes caractéristiques 40 sont alors comparées entre elles, de manière à détecter une valeur maximale globale sur l'ensemble des images de convolution.

La position dans l'image bidimensionnelle du pixel donnant ladite valeur maximale correspond au centre d'un toron, et la forme caractéristique pour laquelle la valeur maximale a été obtenue fournit les dimensions et l'orientation de la section du toron dans le plan de coupe de l'image. La zone correspondante correspond donc à un toron détecté et est marquée comme traitée et exclue des itérations ultérieures du calcul de convolution.

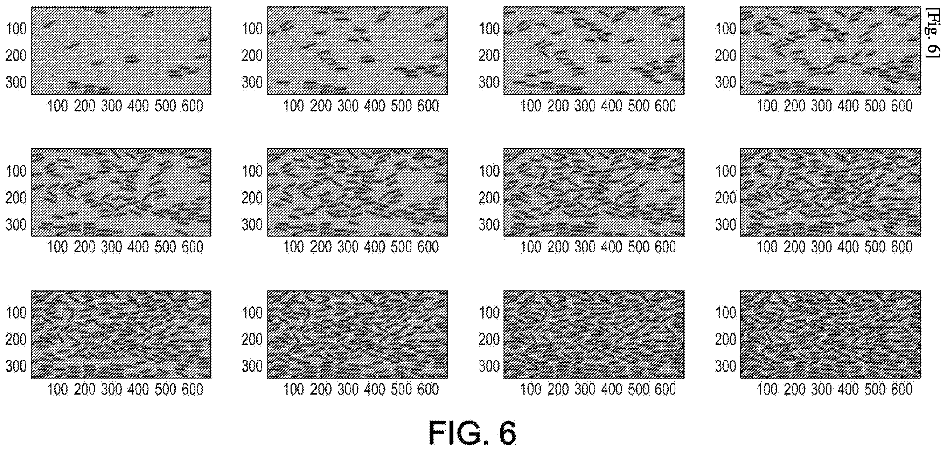

Les étapes de calcul de produits de convolutions, de détection du maximum sur les images de convolution obtenues et de marquage de la zone correspondante comme un nouveau toron sont itérées sur les régions non-traitées de l'image bidimensionnelle, afin de détecter les torons de l'image un à un. Les résultats progressivement obtenus sont représentés sur la figure 6.

Les torons les plus évidemment visibles dans l'image bidimensionnelle sont détectés les premiers, puis le procédé détecte progressivement les torons moins évidents.

Cet ordre de détection permet de simplifier l'analyse des zones les plus complexes après exclusion des torons précédemment détectés.

Les torons détectés sont avantageusement affichés visuellement sur l'image bidimensionnelle, de façon à ce qu'un opérateur puisse manuellement arrêter le procédé de détection lorsqu'il considère un nombre suffisant de torons détectés.

Alternativement, un critère d'arrêt du procédé peut être mis en œuvre, comme par exemple une proportion de la surface de l'image occupée par les torons à partir de laquelle on considère qu'un nombre suffisant de torons a été détecté. Cette proportion peut être calculée en fonction du rapport volumique des fibres 21, 22 et de la matrice 23 dans la pièce 20. Cette proportion est typiquement de l'ordre de 60%.

A la fin du procédé, les informations obtenues sont enregistrées, pour un éventuel traitement et/ou une reconstitution numérique de la pièce 20. Ces informations comprennent, pour chaque toron, la position du centre du toron, les dimensions de la forme caractéristique correspondant à la section du toron et son orientation.

Le procédé présenté permet donc une identification automatique des torons dans la pièce et l'obtention des données correspondantes, sans intervention directe d'un opérateur. Les points forts de ce procédé sont donc l'automatisation et la réduction du risque d'erreurs, tout en assurant une forte versatilité de l'analyse, grâce à la prise en compte de plusieurs paramètres pouvant varier tels que : la taille des torons, la forme des torons ainsi que leurs orientations autour de leur centre.

## Revendications

1. Procédé d'analyse tomographique d'une pièce (20) composite comprenant une matrice (23) et des fibres (21, 22) noyées dans la matrice (23), le procédé comprenant les étapes suivantes :
- acquisition d'au moins une image bidimensionnelle de la pièce (20) au moyen d'un dispositif de tomographie (1),
**caractérisé en ce que** le procédé comporte encore les étapes:
- génération d'une pluralité de formes caractéristiques (40) des fibres (21, 22) et, optionnellement, pour chaque forme caractéristique (40), d'un masque de convolution (50, 51, 52) comprenant une pluralité de copies de la forme caractéristique (40),
- calcul, pour chacune des formes caractéristiques (40), d'un produit de convolution de l'image bidimensionnelle avec la forme caractéristique (40) ou avec le masque de convolution (50, 51, 52) correspondant, et obtention d'une image de convolution,
- détection d'une position dans l'image bidimensionnelle correspondant à un maximum global sur toutes les images de convolution obtenues pour chacune des formes caractéristiques (40), et attribution d'un centre de fibre (21, 22) à ladite position,
- marquage comme traitée d'une région de l'image disposée autour du centre de fibre et correspondant à la forme caractéristique (40) pour laquelle le maximum a été obtenu, et
- itération des étapes de calcul, de détection et de marquage sur les régions non-traitées de l'image.

2. Procédé selon la revendication précédente, dans lequel le procédé comprend une étape de prétraitement de l'image, comprenant au moins l'un parmi un filtrage d'une valeur moyenne de l'image, et une suppression de bords de l'image.

3. Procédé selon l'une des revendications précédentes, dans lequel l'étape d'acquisition de la au moins une image bidimensionnelle comprend l'acquisition d'une image tridimensionnelle (30) de la pièce (20) au moyen du dispositif de tomographie (1) et la réalisation d'au moins une coupe plane dans l'image tridimensionnelle (30) pour obtenir chaque image bidimensionnelle.

4. Procédé selon l'une des revendications précédentes, dans lequel les formes caractéristiques (40) des fibres (21, 22) sont des ellipses.

5. Procédé selon l'une des revendications précédentes, dans lequel, parmi les formes caractéristiques (40) générées, au moins deux des formes caractéristiques (40) présentent des dimensions différentes l'une de l'autre.

6. Procédé selon l'une des revendications précédentes, dans lequel, parmi les formes caractéristiques (40) générées, au moins deux des formes caractéristiques (40) présentent des inclinaisons différentes l'une de l'autre par rapport à une direction de référence de l'image bidimensionnelle.

7. Procédé selon l'une des revendications précédentes, dans lequel, parmi les masques de convolution (50, 51, 52) générés, au moins deux masques de convolution (50, 52) comprennent des formes caractéristiques (40) disposées avec des écartements différents entre lesdits deux masques de convolution (50, 52).

8. Procédé selon l'une des revendications précédentes, dans lequel la pièce (20) est une pièce de carter de turbomachine, ou une aube de rotor de compresseur, de stator ou de soufflante d'une turbomachine.

9. Produit programme d'ordinateur comprenant des instructions permettant, lorsqu'il est exécuté sur un ordinateur lié à un dispositif de tomographie, la mise en œuvre du procédé selon l'une des revendications précédentes.

## Patentansprüche

1. Verfahren zur tomographischen Analyse eines Verbundbauteils (20), das eine Matrix (23) und in die Matrix (23) eingebettete Fasern (21, 22) enthält, wobei das Verfahren die folgenden Schritte umfasst:
- Erfassen zumindest eines zweidimensionalen Bildes des Bauteils (20) mithilfe einer Tomographievorrichtung (1),
**dadurch gekennzeichnet, dass** das Verfahren ferner folgende Schritte umfasst:
- Erzeugen einer Vielzahl von charakteristischen Formen (40) der Fasern (21, 22) und optional für jede charakteristische Form (40) Erzeugen einer Faltungsmaske (50, 51, 52), die eine Vielzahl von Kopien der charakteristischen Form (40) umfasst,
- für jede der charakteristischen Formen (40) Berechnen eines Faltungsprodukts des zweidimensionalen Bildes mit der charakteristischen Form (40) oder mit der entsprechenden Faltungsmaske (50, 51 , 52) und Erhalten eines Faltungsbildes,
- Erkennen einer Position in dem zweidimensionalen Bild, die einem globalen Maximum über alle für jede der charakteristischen Formen (40) erhaltenen Faltungsbilder entspricht, und Zuweisen eines Faserzentrums (21, 22) zu dieser Position,
- Markieren desjenigen Bereichs des Bildes als bearbeitet, der um das Faserzentrum herum angeordnet ist und der charakteristischen Form (40) entspricht, für die das Maximum erhalten wurde, und
- Iteration der Schritte des Berechnens, Erfassens und Markierens an den nicht bearbeiteten Bereichen des Bildes.

2. Verfahren nach dem vorhergehenden Anspruch,
wobei das Verfahren einen Schritt der Vorbearbeitung des Bildes umfasst, der zumindest eines aus Ausfiltern eines Mittelwerts des Bildes und Entfernen von Kanten des Bildes umfasst.

3. Verfahren nach einem der vorhergehenden Ansprüche,
wobei der Schritt des Erfassens des zumindest einen zweidimensionalen Bildes das Erfassen eines dreidimensionalen Bildes (30) des Bauteils (20) mit Hilfe der Tomographievorrichtung (1) und das Erstellen zumindest eines ebenen Schnitts in dem dreidimensionalen Bild (30) umfasst, um jedes zweidimensionale Bild zu erhalten.

4. Verfahren nach einem der vorhergehenden Ansprüche,
wobei die charakteristischen Formen (40) der Fasern (21, 22) Ellipsen sind.

5. Verfahren nach einem der vorhergehenden Ansprüche,
wobei von den erzeugten charakteristischen Formen (40) zumindest zwei der charakteristischen Formen (40) voneinander verschiedene Abmessungen aufweisen.

6. Verfahren nach einem der vorhergehenden Ansprüche,
wobei von den erzeugten charakteristischen Formen (40) zumindest zwei der charakteristischen Formen (40) voneinander verschiedene Neigungen in Bezug auf eine Referenzrichtung des zweidimensionalen Bildes aufweisen.

7. Verfahren nach einem der vorhergehenden Ansprüche,
wobei von den erzeugten Faltungsmasken (50, 51, 52) zumindest zwei Faltungsmasken (50, 52) charakteristische Formen (40) aufweisen, die mit unterschiedlichen Abständen zwischen den beiden Faltungsmasken (50, 52) angeordnet sind.

8. Verfahren nach einem der vorhergehenden Ansprüche,
wobei es sich bei dem Bauteil (20) um ein Gehäusebauteil einer Turbomaschine bzw. eines Turbotriebwerks oder um eine Rotorschaufel eines Kompressors, eines Stators oder eines Gebläses einer Turbomaschine bzw. eines Turbotriebwerks handelt.

9. Computerprogrammprodukt, das Anweisungen enthält, die, wenn es auf einem mit einer Tomographievorrichtung verbundenen Computer ausgeführt wird, die Durchführung des Verfahrens nach einem der vorhergehenden Ansprüche ermöglichen.

## Claims

1. Method for tomographic analysis of a composite part (20) comprising a matrix (23) and fibers (21, 22) embedded in the matrix (23), the method comprising the following steps:
- acquiring at least one two-dimensional image of the part (20) by means of a tomographic device (1),
**characterized in that** the method further comprises the steps:
- generating a plurality of characteristic shapes (40) of the fibers (21, 22) and, optionally, for each characteristic shape (40), a convolution mask (50, 51, 52) comprising a plurality of copies of the characteristic shape (40),
- calculating, for each of the characteristic shapes (40), a convolution product of the two-dimensional image with the characteristic shape (40) or with the corresponding convolution mask (50, 51, 52), and obtaining a convolution image,
- detecting a position in the two-dimensional image corresponding to a global maximum overall the resulting convolution images for each of the characteristic shapes (40), and assignment of the fiber center (21, 22) to said position,
- marking as processed a region of the image placed around the fiber center and corresponding to the characteristic shape (40) for which the maximum was obtained, and
- iterating the steps of calculating, detecting and marking on the unprocessed regions of the image.

2. Method according to the preceding claim, wherein the method comprises a step of preprocessing the image, comprising at least one among a filtering of an average value of the image, and removal of edges from the image.

3. Method according to one of the preceding claims, wherein the acquisition step for the at least one two-dimensional image may comprise the acquisition of a three-dimensional image (30) of the part (20) by means of the tomographic device (1) and the implementation of at least one planar section in the three-dimensional image (30) to obtain each two-dimensional image.

4. Method according to one of the preceding claims, wherein the characteristic shapes (40) of the fibers (21, 22) are ellipses.

5. Method according to one of the preceding claims, wherein among the generated characteristic shapes (40), at least two characteristic shapes (40) have different dimensions from each other.

6. Method according to one of the preceding claims wherein among the generated characteristic shapes (40), at least two characteristic shapes (40) have different inclinations from each other relative to a reference direction of the two-dimensional image.

7. Method according to one of the preceding claims, wherein among the convolution masks (50, 51, 52) generated, at least two convolution masks (50, 52) comprise characteristic shapes (40) arranged with different separations between said two convolution masks (50, 52).

8. Method according to one of the preceding claims, wherein the part (20) is a part of a turbomachine housing, or a vane of a compressor rotor, stator or fan of the turbomachine.

9. Computer program product comprising instructions allowing implementation of the method according to one of the preceding claims when it is executed in a computer linked to a tomographic device.
